# FASCICULE DE BREVET EUROPEEN

(11) **EP 4 296 168 B1**
(45) Date de publication et mention de la délivrance du brevet: **23.04.2025**
(21) Numéro de dépôt: 23180328.9
(22) Date de dépôt: 20.06.2023
(51) Int. Cl.: B64D 37/22

(54) **SYSTÈME DE RÉSERVOIR AVEC UNE VANNE SOUS FORME D'UN SYSTÈME PENDULAIRE**
TANKSYSTEM MIT EINEM VENTIL IN FORM EINES PENDELSYSTEMS
TANK SYSTEM WITH A VALVE IN THE FORM OF A PENDULUM SYSTEM

(30) Priorité: 24.06.2022 FR 2206317
(43) Date de publication de la demande: 27.12.2023
(73) Titulaire: Airbus, 31700 Blagnac (FR); Airbus Operations, 31060 Toulouse (FR)
(72) Inventeur: ANDRIEU, Thomas, 31060 TOULOUSE (FR); MILLIERE, Jérôme, 31060 TOULOUSE (FR); LAVERNE, Julien, 31060 TOULOUSE (FR); LANDOLT, Jonathan, 31700 BLAGNAC (FR)
(74) Mandataire: Cabinet Le Guen Maillet

(56) Documents cités:
- EP-A2- 0 463 567
- FR-A- 493 564
- GB-A- 466 335
- KR-A- 20060 064 914
- RU-C1- 2 669 913

## Description

### DOMAINE TECHNIQUE

La présente invention concerne un système de réservoir comportant un réservoir contenant un liquide et une vanne sous la forme d'un système pendulaire, ainsi qu'un aéronef comportant un tel système de réservoir.

### ÉTAT DE LA TECHNIQUE ANTÉRIEURE

Dans un aéronef, le carburant tel que le kérosène ou le dihydrogène, est stocké dans un réservoir fixé dans l'aéronef. Pour canaliser le carburant du réservoir vers un moteur, l'aéronef présente en partie basse du réservoir, une canalisation de vidange fluidiquement connectée à une canalisation de distribution elle-même fluidiquement connectée au moteur et sur laquelle une pompe est connectée. La canalisation de vidange présente plusieurs orifices de vidange qui permettent l'écoulement du carburant vers la canalisation de vidange et le carburant s'écoule ainsi du réservoir vers le moteur.

Lors des différentes phases de vol, l'aéronef ne reste pas horizontal et peut prendre des positions basculées en particulier lors du décollage, de l'atterrissage et des changements d'altitude. Lorsque l'aéronef est dans une telle position basculée, le carburant liquide se repositionne sous l'effet de la gravité, et selon la quantité de carburant restant dans le réservoir, un ou plusieurs orifices de vidange peuvent se trouver en dehors du carburant et la pompe aspire alors, au moins en partie, du gaz présent dans le réservoir.

Pour éviter un tel problème, il a été mis au point des vannes qui comportent par exemple un bouchon mobile soumis à la pesanteur qui vient obturer l'orifice de vidange lorsque l'aéronef prend une position penchée.

Bien que de tels systèmes donnent de bons résultats, il est nécessaire de trouver des systèmes plus robustes et qui en particulier assurent qu'au moins une vanne est toujours ouverte.

Le document GB 466 335 A, selon son résumé, divulgue un réservoir de carburant pourvu de deux sorties menant à un tuyau commun. Chaque sortie comporte une vanne montée sur une poutre pivotante portant des éléments flottants disposés de manière à ce que la poutre soit déplacée par les éléments flottants pour fermer la sortie sur laquelle la profondeur du carburant a été réduite.

### EXPOSE DE L'INVENTION

Un objet de la présente invention est de proposer un système de réservoir d'aéronef comportant un réservoir contenant un liquide et une vanne sous la forme d'un système pendulaire qui assure la fermeture d'un orifice de vidange lorsque l'aéronef prend des positions basculées.

À cet effet, est proposé un système de réservoir pour un aéronef présentant une direction longitudinale, ledit système de réservoir comportant :
- un réservoir destiné à contenir un liquide,
- une canalisation de vidange qui est logée et fixée dans le réservoir en partie basse de celui-ci et qui étend parallèlement à la direction longitudinale et présente à chaque extrémité un orifice de vidange,
- pour chaque orifice de vidange, un entonnoir solidaire de la canalisation de vidange, où l'axe de l'entonnoir est parallèle à la direction longitudinale et où le sommet de l'entonnoir débouche dans l'orifice de vidange, où l'entonnoir présente une paroi traversée par au moins une fenêtre,
- un corps monté mobile en translation parallèlement à la direction longitudinale,
- pour chaque entonnoir, un bouchon solidaire du corps et arrangé mobile à l'intérieur dudit entonnoir alternativement entre une position ouverte dans laquelle le bouchon n'obture ni les fenêtres de l'entonnoir ni l'orifice de vidange et une position fermée dans laquelle le bouchon obture au moins l'orifice de vidange, et
- un bras dont une première extrémité est montée articulée au réservoir au-dessus du corps et dont une deuxième extrémité est montée articulée sur le corps par l'intermédiaire d'une liaison combinant une liaison pivot autour d'un axe perpendiculaire à la direction longitudinale et horizontal et une liaison glissière perpendiculaire à la direction longitudinale dans un plan perpendiculaire audit axe.

Un tel système de réservoir est particulièrement robuste en fonctionnement grâce à l'effet pendulaire du bras et assure qu'au moins l'un des orifices est toujours ouvert quelle que soit la position de l'aéronef.

Avantageusement, le système de réservoir comporte un poids qui est fixé au bras au plus près de sa deuxième extrémité.

Avantageusement, chaque entonnoir est tronc-conique et chaque bouchon est de forme tronc-conique.

Avantageusement, chaque entonnoir se prolonge à l'opposé de l'orifice de vidange par un cylindre dont l'axe est parallèle à la direction longitudinale, chaque bouchon se prolonge à l'opposé de l'orifice de vidange par un cylindre dont l'axe est parallèle à la direction longitudinale, et les cylindres des bouchons coulissent dans les cylindres des entonnoirs. L'invention propose également un aéronef comportant une canalisation de distribution, une pompe montée sur la canalisation de distribution et un système de réservoir selon l'une des variantes précédentes où la canalisation de vidange est fluidiquement connectée à la canalisation de distribution.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une représentation schématique d'un système de réservoir selon l'invention dans une position horizontale de vol, et
Fig. 3 est une représentation schématique du système de réservoir de la Fig. 2 dans une position basculée de l'aéronef.

### EXPOSÉ DÉTAILLÉ DE MODES DE RÉALISATION

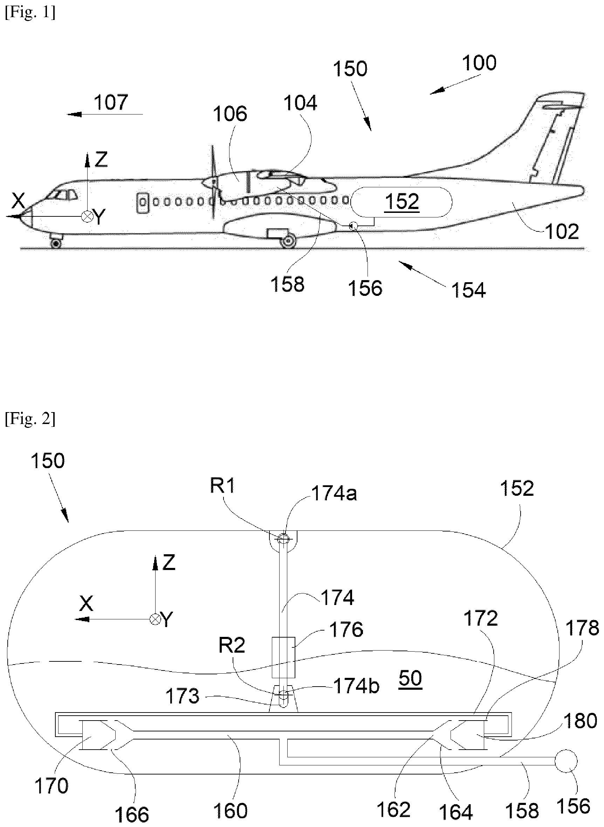

Dans la description qui suit, les termes relatifs à une position sont pris en référence à un aéronef en position normale de vol, c'est-à-dire comme il est représenté sur la Fig. 1.

Dans la description qui suit, et par convention, on appelle X la direction longitudinale de l'aéronef, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

La Fig. 1 montre un aéronef 100 qui comporte un fuselage 102 de chaque côté duquel est fixée une aile 104 qui porte au moins un moteur 106 fonctionnant avec du carburant comme du kérosène ou du dihydrogène. Dans le mode de réalisation de l'invention présenté à la Fig. 1, le moteur 106 est un moteur à hélice, mais tout autre type de moteur est envisageable.

La flèche 107 indique la direction en marche avant de l'aéronef 100.

L'aéronef 100 comporte un système de réservoir 150 selon l'invention, et qui comporte un réservoir 152 dans lequel est stocké le carburant sous forme liquide. Dans le mode de réalisation de l'invention, le réservoir 152 est disposé à l'arrière du fuselage 102, mais un positionnement différent est possible.

L'aéronef 100 comporte également un système d'alimentation 154 qui assure la connexion fluidique entre le réservoir 152 et chaque moteur 106. Le système d'alimentation 154 comporte, entre autres, une canalisation de distribution 158 et une pompe 156 montée sur la canalisation de distribution 158 et arrangée pour pomper le carburant du réservoir 152 et l'envoyer dans chaque moteur 106.

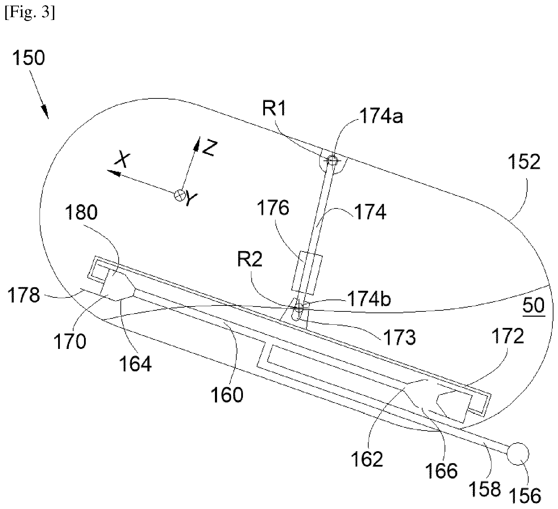

La Fig. 2 montre le système de réservoir 150 lorsque l'aéronef 100 est en position horizontale, et la Fig. 3 montre le système de réservoir 150 lorsque l'aéronef 100 est en position basculée qui peut être due par exemple à un décollage ou une montée en altitude. Dans le cas d'un atterrissage ou une descente en altitude, le positionnement est inversé et la direction longitudinale X pointe vers le bas.

Dans le mode de réalisation de l'invention présenté sur les Figs., le réservoir 152 présente une forme cylindrique dont l'axe est orienté parallèlement à la direction longitudinale X, mais une forme différente est également possible, par exemple parallélépipédique.

Le système de réservoir 150 comporte une canalisation de vidange 160 qui est logée et fixée dans le réservoir 152 en partie basse de celui-ci de manière à plonger dans le carburant 50. La canalisation de vidange 160 est fluidiquement connectée à la canalisation de distribution 158, ici par un coude au milieu de la canalisation de vidange 160.

La canalisation de vidange 160 s'étend parallèlement à la direction longitudinale X et présente à chaque extrémité un orifice de vidange 162.

Le système de réservoir 150 comporte, pour chaque orifice de vidange 162, un entonnoir 164 solidaire de la canalisation de vidange 160 où l'axe de l'entonnoir 164 est parallèle à la direction longitudinale X et où le sommet de l'entonnoir 164 débouche dans l'orifice de vidange 162. Chaque entonnoir 164 est ici tronc-conique et pointe vers l'orifice de vidange 162.

L'entonnoir 164 est constitué de parois dont au moins une est traversée par une fenêtre 166 qui assure la communication fluidique entre l'extérieur et l'intérieur de l'entonnoir 164. Ainsi, le carburant 50 est aspiré par la pompe 156 et s'écoule à travers chaque fenêtre 166 à l'intérieur de l'entonnoir 164 pour rejoindre la canalisation de vidange 160, puis la canalisation de distribution 158.

Le système de réservoir 150 comporte un corps 172 qui est rigide et monté mobile en translation parallèlement à la direction longitudinale X.

Le système de réservoir 150 comporte également pour chaque entonnoir 164, un bouchon 170 solidaire du corps 172 et qui se déplace donc avec lui et est ainsi monté coulissant à l'intérieur de l'entonnoir 164, alternativement entre une position ouverte dans laquelle le bouchon 170 n'obture ni les fenêtres 166 de l'entonnoir 164 ni l'orifice de vidange 162 et une position fermée dans laquelle le bouchon 170 obture au moins l'orifice de vidange 162 et accessoirement les fenêtres 166 de l'entonnoir 164. La forme de chaque bouchon 170 est adaptée à la forme de l'entonnoir 164 pour assurer l'étanchéité au niveau de l'orifice de vidange 162. Ici, chaque bouchon 170 est de forme tronc-conique et pointe vers l'orifice de vidange 162.

En position ouverte, le carburant 50 s'écoule vers le moteur 106 et en position fermée, l'orifice de vidange 162 est bouché et rien ne peut s'écouler à travers lui.

Le système de réservoir 150 comporte un bras 174 dont une première extrémité 174a est montée articulée au réservoir 152 au-dessus du corps 172, et ici en partie haute du réservoir 152. La première extrémité 174a est globalement au milieu du corps 172 lorsque l'aéronef 100 est en position horizontale. Le bras 174 est logé à l'intérieur du réservoir 152.

Dans le mode de réalisation de l'invention présenté ici, l'articulation est ici une rotation autour d'un premier axe R1 parallèle à la direction transversale Y et elle prend ici la forme d'une chappe solidaire du réservoir 152 et d'un axe parallèle au premier axe R1 qui est monté dans la chappe et constitue la première extrémité 174a.

Le bras 174 comporte une deuxième extrémité 174b qui est montée articulée sur le corps 172 par l'intermédiaire d'une liaison combinant une liaison pivot autour d'un deuxième axe R2 perpendiculaire à la direction longitudinale X et horizontal, c'est-à-dire ici selon la direction transversale Y et une liaison glissière perpendiculaire à la direction longitudinale X dans un plan XZ perpendiculaire au deuxième axe R2, c'est-à-dire ici selon la direction verticale Z. Dans le mode de réalisation de l'invention présenté ici, l'articulation de la deuxième extrémité 174b prend la forme d'une chappe solidaire du corps 172 dont les trous 173 sont oblongs et où le grand axe constitue la direction de la liaison glissière, et d'un axe parallèle au deuxième axe R2 qui est monté dans la chappe et constitue la deuxième extrémité 174b.

Le bras 174 agit ainsi comme un pendule.

Ainsi, lorsque l'aéronef 100 prend une position basculée comme sur la Fig. 3, le bras 174 pivote autour du premier axe R1 sous l'effet de la pesanteur en entraînant le corps 172 en translation parallèlement à la direction longitudinale X. En se déplaçant, le corps 172 entraîne les bouchons 170 et le bouchon 170 le plus haut vient obturer l'orifice de vidange 162 qui est le plus haut et donc potentiellement en dehors du carburant 50 et il n'y a alors pas de gaz présent dans le réservoir 152 à pénétrer dans la canalisation de vidange 160 par cet orifice de vidange 162, tandis que l'autre orifice de vidange 162 reste plongé dans le carburant 50 et alimente la pompe 156 en carburant 50 et il y a ainsi toujours un orifice de vidange 162 ouvert et plongeant dans le carburant 50. Lors du déplacement du corps 172, la deuxième extrémité 174b est libre de pivoter autour du deuxième axe R2 et de se déplacer à l'intérieur des trous oblongs 173.

Pour faciliter la rotation du bras 174 sous l'effet de la pesanteur, le bras 174 est équipé d'un poids 176 qui est fixé au bras 174 au plus près de sa deuxième extrémité 174b.

Dans le mode de réalisation de l'invention présenté sur les Figs. 2 et 3, chaque entonnoir 164 de forme tronc-conique se prolonge à l'opposé de l'orifice de vidange 162 par un cylindre 178 dont l'axe est parallèle à la direction longitudinale X. De la même manière, chaque bouchon 170 se prolonge à l'opposé de l'orifice de vidange 162 par un cylindre 180 dont l'axe est parallèle à la direction longitudinale X. Le guidage en translation du corps 172 et des bouchons 170 est alors assuré ici par les cylindres 180 des bouchons 170 qui coulissent dans les cylindres 178 des entonnoirs 164.

Mais selon un autre mode de réalisation, le guidage en translation peut être assuré par le guidage du corps 172 par rapport à un élément fixe du réservoir 152, comme par exemple tout système de guidage en translation connu de l'homme du métier.

Dans le mode de réalisation de l'invention présenté ici, les fenêtres 166 sont réalisées dans la paroi du cylindre 178, mais elles peuvent être réalisées dans la paroi tronc-conique.

Bien que l'invention ait été décrite sur la base d'un réservoir pour carburant, elle peut s'appliquer à tous réservoirs contenant un liquide.

## Revendications

1. Système de réservoir (150) pour un aéronef (100) présentant une direction longitudinale (X), ledit système de réservoir (150) comportant :
- un réservoir (152) destiné à contenir un liquide,
- une canalisation de vidange (160) qui est logée et fixée dans le réservoir (152) en partie basse de celui-ci et qui étend parallèlement à la direction longitudinale (X) et présente à chaque extrémité un orifice de vidange (162),
- pour chaque orifice de vidange (162), un entonnoir (164) solidaire de la canalisation de vidange (160), où l'axe de l'entonnoir (164) est parallèle à la direction longitudinale (X) et où le sommet de l'entonnoir (164) débouche dans l'orifice de vidange (162), où l'entonnoir (164) présente une paroi traversée par au moins une fenêtre (166),
- un corps (172) monté mobile en translation parallèlement à la direction longitudinale (X),
- pour chaque entonnoir (164), un bouchon (170) solidaire du corps (172) et arrangé mobile à l'intérieur dudit entonnoir (164) alternativement entre une position ouverte dans laquelle le bouchon (170) n'obture ni les fenêtres (166) de l'entonnoir (164) ni l'orifice de vidange (162) et une position fermée dans laquelle le bouchon (170) obture au moins l'orifice de vidange (162), et
- un bras (174) dont une première extrémité (174a) est montée articulée au réservoir (152) au-dessus du corps (172) et dont une deuxième extrémité (174b) est montée articulée sur le corps (172) par l'intermédiaire d'une liaison combinant une liaison pivot autour d'un axe (R2) perpendiculaire à la direction longitudinale (X) et horizontal et une liaison glissière perpendiculaire à la direction longitudinale (X) dans un plan (XZ) perpendiculaire audit axe (R2).

2. Système de réservoir (150) selon la revendication 1, **caractérisé en ce qu'**il comporte un poids (176) qui est fixé au bras (174) au plus près de sa deuxième extrémité (174b).

3. Système de réservoir (150) selon l'une des revendications 1 ou 2, **caractérisé en ce que** chaque entonnoir (164) est tronc-conique et **en ce que** chaque bouchon (170) est de forme tronc-conique.

4. Système de réservoir (150) selon la revendication 3, **caractérisé en ce que** chaque entonnoir (164) se prolonge à l'opposé de l'orifice de vidange (162) par un cylindre (178) dont l'axe est parallèle à la direction longitudinale (X), **en ce que** chaque bouchon (170) se prolonge à l'opposé de l'orifice de vidange (162) par un cylindre (180) dont l'axe est parallèle à la direction longitudinale (X), et **en ce que** les cylindres (180) des bouchons (170) coulissent dans les cylindres (178) des entonnoirs (164).

5. Aéronef (100) comportant une canalisation de distribution (158), une pompe (156) montée sur la canalisation de distribution (158) et un système de réservoir (150) selon l'une des revendications précédentes où la canalisation de vidange (160) est fluidiquement connectée à la canalisation de distribution (158).

## Patentansprüche

1. Tanksystem (150) für ein Luftfahrzeug (100), das eine Längsrichtung (X) aufweist, wobei das Tanksystem (150) Folgendes umfasst:
- einen Tank (152), der dazu bestimmt ist, eine Flüssigkeit zu enthalten,
- eine Entleerungsleitung (160), die in dem Tank (152) im unteren Teil desselben aufgenommen und befestigt ist und die sich parallel zu der Längsrichtung (X) erstreckt und an jedem Ende eine Entleerungsöffnung (162) aufweist,
- für jede Entleerungsöffnung (162), einen Trichter (164), der mit der Entleerungsleitung (160) fest verbunden ist, wobei die Achse des Trichters (164) parallel zu der Längsrichtung (X) ist und wobei die Spitze des Trichters (164) in der Entleerungsöffnung (162) mündet, wobei der Trichter (164) eine Wand aufweist, die von mindestens einem Fenster (166) durchquert wird,
- einen Körper (172), der parallel zu der Längsrichtung (X) verschiebbar angebracht ist,
- für jeden Trichter (164), einen Stopfen (170), der fest mit dem Körper (172) verbunden ist und innerhalb des Trichters (164) wechselweise zwischen einer offenen Stellung, in der der Stopfen (170) weder die Fenster (166) des Trichters (164) noch die Entleerungsöffnung (162) verschließt, und einer geschlossenen Stellung, in der der Stopfen (170) mindestens die Entleerungsöffnung (162) verschließt, beweglich eingerichtet ist, und
- einen Arm (174), von dem ein erstes Ende (174a) oberhalb des Körpers (172) gelenkig an dem Tank (152) angebracht ist und von dem ein zweites Ende (174b) mittels einer Verbindung, die eine Schwenkverbindung um eine Achse (R2), die senkrecht zu der Längsrichtung (X) und horizontal ist, und eine Gleitverbindung, die in einer zu der Achse (R2) senkrechten Ebene (XZ) senkrecht zu der Längsrichtung (X) ist, kombiniert, gelenkig an dem Körper (172) angebracht ist.

2. Tanksystem (150) nach Anspruch 1, **dadurch gekennzeichnet, dass** es ein Gewicht (176) umfasst, das an dem Arm (174) so nahe wie möglich an dessen zweitem Ende (174b) befestigt ist.

3. Tanksystem (150) nach einem der Ansprüche 1 oder 2, **dadurch gekennzeichnet, dass** jeder Trichter (164) kegelstumpfförmig ist und dass jeder Stopfen (170) kegelstumpfförmig ist.

4. Tanksystem (150) nach Anspruch 3, **dadurch gekennzeichnet, dass** jeder Trichter (164) gegenüber der Entleerungsöffnung (162) durch einen Zylinder (178) verlängert wird, dessen Achse parallel zu der Längsachse (X) ist, dass jeder Stopfen (170) gegenüber der Entleerungsöffnung (162) durch einen Zylinder (180) verlängert wird, dessen Achse parallel zu der Längsrichtung (X) ist, und dass die Zylinder (180) der Stopfen (170) in den Zylindern (178) der Trichter (164) gleiten.

5. Luftfahrzeug (100), das eine Verteilungsleitung (158), eine Pumpe (156), die in der Verteilungsleitung (158) angebracht ist, und ein Tanksystem (150) nach einem der vorhergehenden Ansprüche umfasst, wobei die Entleerungsleitung (160) mit der Verteilungsleitung (158) fluidisch verbunden ist.

## Claims

1. Tank system (150) for an aircraft (100) having a longitudinal direction (X), said tank system (150) comprising:
- a tank (152) intended to contain a liquid,
- a drainage line (160) that is housed and fixed in the bottom part of the tank (152), extends parallel to the longitudinal direction (X), and has a drainage port (162) at each end,
- for each drainage port (162), a funnel (164) secured to the drainage line (160), wherein the axis of the funnel (164) is parallel to the longitudinal direction (X) and wherein the top of the funnel (164) opens into the drainage port (162), wherein the funnel (164) has a wall, through which at least one window (166) passes,
- a body (172) mounted to be able to move in translation parallel to the longitudinal direction (X),
- for each funnel (164), a plug (170) that is secured to the body (172) and arranged to be able to move inside said funnel (164) alternately between an open position in which the plug (170) blocks off neither the windows (166) in the funnel (164) nor the drainage port (162) and a closed position in which the plug (170) blocks off at least the drainage port (162), and
- an arm (174), a first end (174a) of which is mounted in an articulated manner to the tank (152) above the body (172) and a second end (174b) of which is mounted in an articulated manner on the body (172) via a connection combining a connection that pivots about an axis (R2) perpendicular to the longitudinal direction (X) and horizontal and a connection that slides perpendicular to the longitudinal direction (X) in a plane (XZ) perpendicular to said axis (R2).

2. Tank system (150) according to Claim 1, **characterized in that** it comprises a weight (176), which is fixed to the arm (174) as close as possible to the second end (174b) thereof.

3. Tank system (150) according to either of Claims 1 and 2, **characterized in that** each funnel (164) is frustoconical and **in that** each plug (170) has a frustoconical shape.

4. Tank system (150) according to Claim 3, **characterized in that** each funnel (164) is extended at the end facing away from the drainage port (162) by a cylinder (178), the axis of which is parallel to the longitudinal direction (X), **in that** each plug (170) is extended at the end facing away from the drainage port (162) by a cylinder (180), the axis of which is parallel to the longitudinal direction (X), and **in that** the cylinders (180) of the plugs (170) slide within the cylinders (178) of the funnels (164).

5. Aircraft (100) comprising a distribution line (158), a pump (156) mounted on the distribution line (158) and a tank system (150) according to one of the preceding claims, wherein the drainage line (160) is fluidically connected to the distribution line (158).
